# EUROPÄISCHE PATENTSCHRIFT

(11) **EP 1 939 342 B1**
(45) Veröffentlichungstag und Bekanntmachung des Hinweises auf die Patenterteilung: **31.10.2012**
(21) Anmeldenummer: 07023810.0
(22) Anmeldetag: 08.12.2007
(51) Int. Cl.: D04H 5/03

(54) **Trägereinlage, Verfahren zu deren Herstellung und deren Verwendung**
Reinforcements, method for their manufacture and application thereof
Garniture de support, son procédé de fabrication et d'utilisation

(30) Priorität: 20.12.2006 DE 102006060241
(43) Veröffentlichungstag der Anmeldung: 02.07.2008
(73) Patentinhaber: Johns Manville Europe GmbH, 86399 Bobingen (DE)
(72) Erfinder: Groh, Dr. Werner, 86830 Schabmünchen (DE); Greiser, Wolfgang, 86356 Neusäss (DE); Weizenegger, Hermann, 86630 Schwabmünchen (DE); Lehnert, Jörg, 86830 Schwabmünchen (DE); Weisskopf, Klaus, Dr., 65205 Wiesbaden (DE)
(74) Vertreter: Mai, Dörr, Besier

(56) Entgegenhaltungen:
- EP-A- 0 806 509
- EP-A- 0 806 510
- EP-A- 1 126 066
- WO-A-01/09421
- DE-A1- 3 941 189
- DE-A1-102005 039 543
- FR-A- 2 761 381
- GB-A- 946 693
- US-A- 5 396 689

## Beschreibung

Die Erfindung betrifft eine Verfahren zur Herstellung einer Trägereinlage, die sich insbesondere als Trägereinlage zur Herstellung von Dachbahnen oder als Plane oder Fläche eignet.

Trägereinlagen zur Herstellung von Dachbahnen müssen vielfältigen Anforderungen genügen. So ist einerseits eine ausreichende mechanische Stabilität gefordert, wie gute Perforationsfestigkeit und gute Zugfestigkeit, um beispielsweise den mechanischen Belastungen bei der Weiterverarbeitung, wie Bituminierung oder Verlegen, standzuhalten. Außerdem wird eine hohe Beständigkeit gegen thermische Belastung, beispielsweise beim Bituminieren oder gegen strahlende Wärme, und Widerstandsfähigkeit gegen Flugfeuer verlangt. Es hat daher nicht an Versuchen gefehlt, bestehende Trägereinlagen zu verbessern.

So ist es bereits bekannt, Vliesstoffe auf der Basis von Synthesefaservliesen mit Verstärkungsfasern, beispielsweise mit Glasfasern zu kombinieren. Beispiele für solche Dichtungsbahnen findet man in den GB-A-1,517,595, DE-Gbm-77-39,489, EP-A-160,609, EP-A-176-847, EP-A-403,403 und EP-A-530,769. Die Verbindung zwischen Faservlies und Verstärkungsfasern erfolgt nach diesem Stand der Technik entweder durch Verkleben mittels eines Bindemittel oder durch Vernadeln der Schichten aus unterschiedlichem Material.

Es ist ferner bekannt, Verbundstoffe durch Wirk- oder Nähwirktechniken herzustellen. Beispiele dafür finden sich in den DE-A-3,347,280, US-A-4,472,086, EP-A-333,602 und EP-A-395,548.

Aus der DE-A-3,417,517 ist ein textiler Einlagestoff mit anisotropen Eigenschaften und ein Verfahren zu dessen Herstellung bekannt. Der Einlagestoff besteht aus einem Substrat, das eine unter 150 °C schmelzende Oberfläche besitzt, und damit verbundenen über 180 °C schmelzenden Verstärkungsfilamenten, die auf dieser Oberfläche parallel zueinander fixiert sind. Gemäß einer Ausführungsform kann es sich bei dem Substrat um einen Vliesstoff handeln, auf dessen einer Oberfläche sich Schmelzklebefasern oder -fäden befinden, die zur Herstellung einer Verklebung der parallel angeordneten Verstärkungsfasern mit dem Vliesstoff vorgesehen sind.

Aus der US-A-4,504,539 ist eine Kombination von Verstärkungsfasern in Form von Bikomponentenfasern mit Vliesstoffen aus der Basis von Synthesefasern bekannt.

Aus der EP-A-0,281,643 ist eine Kombination von Verstärkungsfasern in Form eines Netzes aus Bikomponentenfasern mit Vliesstoffen auf der Basis von Synthesefasern bekannt, wobei der Gewichtsanteil des Netzes aus Bikomponentenfasern mindestens 15 Gew.-% beträgt.

Aus der JP-A-81-5879 ist ein Verbundstoff bekannt, der mit einem netzförmigen Verstärkungsmaterial versehen ist.

Aus der GB-A-2,017,180 ist ein Filtermaterial aus anorganischem Vliesmaterial und Metalldrähten bekannt, das zur Abluftreinigung bei hohen Temperaturen (höher 300 °C) eingesetzt wird.

DE-Gbm-295 00 830 beschreibt die Verstärkung eines Glasvlieses mit synthetischen Monofilen. Diese Verstärkungsmonofile tragen in der Dichtungsbahn nicht wesentlich zur Bezugskraft bei geringen Dehnungen bei. Sie weisen aber eine deutlich höhere Höchstzugkraftdehnung auf als das Glasvlies; somit wird der flächige Zusammenhang der Dichtungsbahn auch noch bei Verformungen gewährleistet, die zum Bruch des Glasvlieses führen können.

Der Schrumpf der synthetischen Monofile ist höher als der Schrumpf des Glasvlieses und kann in der Dichtungsbahn zur Welligkeit führen.

Auch aus der DE-A-3,941,189 ist eine Kombination von Verstärkungsfasern in Form einer Fadenkette mit Vliesstoffen auf der Basis von Synthesefasern bekannt, die auf verschiedenste Arten miteinander verbunden werden können. In dieser Anmeldung wird betont, daß sich der Young-Modul der verstärkten Trägereinlage sich gegenüber einem unverstärkten Basisvlieses nicht ändert.

Aus FR-A-2761381 sind Trägereinlagen bekannt, bei denen mindestens ein textiles Flächengebilde aus Polyester-Stapelfasern und Polyamid-Stapelfasern, welches mindestens eine Verstärkung aufweist, hydrodynamisch verfestigt wird.

Aus WO 2001/09421 sind Trägereinlagen aus einem Glasvlies als textile Fläche und einer Spunbond-Verstärkung bekannt, die hydrodynamisch verfestigt werden.

Aus EP-A-0,806,509 und EP-A-0,806,510 sind Trägereinlagen, enthaltend ein textiles Flächengebilde und eine Verstärkung, bekannt, die bereits bei einer geringen Dehnung die einwirkende Kraft aufnehmen. Derartige Trägereinlagen zeigen gute anwendungstechnische Eigenschaften, dennoch besteht die ständige Aufgabe auch diese Produkte noch zu verbessern.

Ferner war aus dem Stand der Technik bekannt, dass die Spinnvliese nach ihrer Herstellung einer mechanischen Verfestigung unterworfen werden. Hierzu wird das Spinnvlies üblicherweise einer Vernadelung unterworfen. Um eine ausreichende Delaminierungsstabilität zu erzielen sind Nadeldichten von 20 bis 100 Stichen/cm² notwendig. Trotzdem die Vernadelung mittels Nadeln erfolgt deren Kerbenüberstand, bevorzugt der Summe aus Kerbenüberstand und Kerbentiefe, kleiner ist als der Durchmesser der Verstärkungsfäden, ist eine Schädigung der Verstärkungsfäden unvermeidbar. Derartige Schädigungen können zu Problemen bei der Dimensionsstabilität führen.

Aufgabe der vorliegenden Erfindung war somit verbesserte Trägereinlagen bereitzustellen, welche in kommerziellen Mengen kostengünstig hergestellt werden können.

Gegenstand der vorliegenden Erfindung ist somit eine Verfahren zur Herstellung einer Trägereinlage gemäß Anspruch 1, sowie in den Unteransprüchen 2 bis 24 beschrieben.

Die in der Trägereinlage vorhandene Verstärkung ist vorzugsweise derart gestaltet, dass die Verstärkung eine Kraft aufnimmt, so daß sich im Kraft-Dehnungs-Diagramm (bei 20 °C) die Bezugskraft der Trägereinlage mit Verstärkung verglichen mit der Trägereinlage ohne Verstärkung im Bereich zwischen 0 und 1 % Dehnung an mindestens einer Stelle um mindestens 10 % unterscheidet.

In einer weiteren Ausführungsform kann die Verstärkung der Trägereinlage auch so eingebaut werden, dass eine Kraftaufnahme durch die Verstärkung erst bei höheren Dehnungen erfolgt.

Mit Hilfe der hydrodynamischen Verfestigung ist es möglich die Anwendungseigenschaften der Trägereinlage weiter zu verbessern. Sehr gute Anwendungseigenschaften werden insbesondere dann beobachtet, wenn verschiedene Parameter optimiert werden können. Bei Trägereinlagen sind hier insbesondere die geringe Schädigung der Verstärkung - ausgedrückt als Festigkeit der Verstärkung nach dem Einbau in die Trägereinlage -, eine ausreichende Stabilität gegen Delaminierung und eine gute Höchstzugkraft zu nennen. Eine Optimierung all dieser Parameter ist wünschenswert, jedoch bislang nur unzureichend zu realisieren.

Hier schafft die vorliegende Erfindung Abhilfe. Es wurde überraschend gefunden, dass eine Optimierung der vorstehend genannten Parameter möglich ist, wenn die Verfestigung des textilen Flächengebildes, welches bereits die Verstärkung aufweist, hydrodynamisch wie in Anspruch 1 beschrieben erfolgt.

Die mittels des erfindungsgemäßen Verfahren hergestellten Trägereinlagen zeigen gegenüber mechanisch vernadelten Trägereinlagen eine Optimierung der Parameter Höchstzukraft längs, Delaminierungswiderstand und verbleibende Festigkeit der Verstärkung nach Verfestigung. Die Trägereinlagen zeigen ein - gegenüber mechanisch vernadelten Trägereinlagen - vergleichbare Höchstzukraft längs und einen vergleichbaren Delaminierungswiderstand, die verbleibende Festigkeit der Verstärkung nach der Wasserstrahl-Vernadelung ist jedoch mindestens doppelt so hoch ist wie bei der mechanischen Vernadelung. Die mechanischen Vernadelung erfolgt bei Stichdichten von 20 bis 100 Stichen/cm², vorzugsweise bei 40 Stichen/cm².

Bei der erfindungsgemäßen hydrodynamischen Verfestigung unterbleibt eine Schädigung der Verstärkung, obwohl die Verfestigung der Trägereinlage bewerkstelligt werden kann. Dieser Sachverhalt spiegelt sich darin wieder, dass die Delaminierungs-Eigenschaften und die Höchstzugkraft sehr gut sind, und andererseits die Zahl der geschädigten Verstärkungen sehr gering - verglichen mit konventionell vernadelten Trägereinlagen - ist.

Bei der hydrodynamischen Verfestigung handelt es sich bevorzugt um eine Wasserstrahl-Vernadelung. Der Druck bei der Wasserstrahl-Vernadelung beträgt zwischen 100 und 300 bar.

Der Düsendurchmesser beträgt zwischen 0,05 und 0,25 mm, vorzugsweise zwischen 0,07 und 0,2 mm. Die Düsen werden in Form von sogenannten Balken angeordnet. Die Anzahl der Düsen beträgt zwischen 10 und 60 Düsen pro inch, vorzugsweise zwischen 20 und 40 Düsen pro inch.

Anstelle von Wasser können auch andere flüssige Medien verwendet werden. Die erfindungsgemäße Wasserstrahl-Vernadelung erfolgt in mehreren Schritten, d.h. einer ersten Wasserstrahl-Vernadelung erfolgt eine Vorverdichtung bzw. Vorverfestigung und nachfolgend wird die eigentliche Verfestigung und Endverfestigung durchgeführt. Hierbei hat sich gezeigt, dass eine erste Wasserstrahl-Vernadelung im Bereich von 5 bis 200 bar günstig ist (Vorverdichtung) und die weitere Verfestigung bei höheren Drücken im Bereich von 100 bis 300 bar erfolgt.

Die Wasserstrahl-Vernadelung kann mittels kontinuierlichem Wasserstrahl erfolgen oder aber auch mittels eines gepulsten Wasserstrahls, wobei die Pulsfrequenz keiner besonderen Einschränkung unterliegt. Das bei der Wasserstrahl-Vernadelung eingesetzte Siebgewebe sind die für Wasserstrahl-Vernadelung üblichen Gewebe. Hierbei handelt es sich beispielsweise um ein 60 Mesh-Siebgewebe. Je nach Typ der Wasserstrahl-Vernadelung kann dieser Wert variieren. Des weiteren kann die Wasserstrahl-Vernadelung auch beidseitig durchgeführt werden.

Die Wasserstrahl-Vernadelung der Trägereinlage erfolgt mit eingestellten Vorschubgeschwindigkeiten. Die untere Grenze für die Vorschubgeschwindigkeit ergibt sich durch Auswertung der Festigkeit in Längsrichtung der erfindungsgemäßen Trägereinlage und somit ist diese von verschiedenen Parametern abhängig. Durch die Vorschubgeschwindigkeit wird letztlich der Energieeintrag der Wasserstrahl-Vernadelung bestimmt. Bezogen auf eine Trägereinlage gemäß Beispiel 1, ergibt sich als untere Grenze der Vorschubgeschwindigkeit ein Wert von mindestens 1,5 m/min, bevorzugt mindestens 2,0 m/min, insbesondere von mindestens 2,5 m/min. Die obere Grenze der Vorschubgeschwindigkeit unterliegt grundsätzlich keiner wesentlichen Beschränkung. Wird die Verfestigung durch lediglich ein bis drei Wasserstrahlbalken bewerkstelligt, so beträgt die Obergrenze für die Verfestigung 20 m/min (bezogen auf eine Trägereinlage gemäß Beispiel 1), bevorzugt von 15 m/min, insbesondere von 10 m/min. Durch eine Erhöhung der Anzahl der Wasserstrahlbalken oder des Druckes, kann die Obergrenze der Vorschubgeschwindigkeit erhöht werden.

Der obere Wert für den Energieeintrag durch die Wasserstrahl-Vernadelung (bezogen auf eine Trägereinlage gemäß Beispiel 1) entspricht somit einer Wasserstrahl-Vernadelung mit einem Düsenbalken von 40 Düsen pro inch, einem Druck von 220 bar und einer Vorschubgeschwindigkeit von 2 m/min, wobei eine Vorverfestigung mit einem gleichen Balken und einem Druck von 40 bar stattgefunden hat.

Der untere Wert für den Energieeintrag durch die Wasserstrahl-Vernadelung (bezogen auf eine Trägereinlage gemäß Beispiel 1) entspricht somit einer Wasserstrahl-Vernadelung mit einem Düsenbalken von 40 Düsen pro inch, einem Druck von 220 bar und einer Vorschubgeschwindigkeit von 10 m/min, wobei eine Vorverfestigung mit einem gleichen Balken und einem Druck von 40 bar stattgefunden hat.

Neben der Wasserstrahlvernadelung können die Spinnvliese, die bereits Verstärkungsfäden enthalten, weiteren Verfestigungsschritten, beispielsweise einer thermischen Behandlung unterworfen werden. In einer bevorzugten Ausführungsform werden die Trägereinlagen ausschließlich durch thermische Behandlung und/oder Wasserstrahlvernadelung verfestigt, eine mechanische Vernadelung unterbleibt.

Bevorzugte, Trägereinlagen zeigen im Kraft-Dehnungs-Diagramm (bei 20 °C), dass die die Bezugskraft der Trägereinlage mit Verstärkung verglichen mit der Trägereinlage ohne Verstärkung im Bereich zwischen 0 und 1 % Dehnung an mindestens einer Stelle um mindestens 10 % unterscheidet, vorzugsweise um mindestens 20 %, insbesondere bevorzugt um mindestens 30 %.

Für eine Reihe von Anwendungen wird aber ein hoher Modul bei geringen Dehnungen auch bei Zimmertemperatur gewünscht. Dieser hohe Modul verbessert die Handhabbarkeit, insbesondere bei leichten Vliesstoffen.

Je nach Anforderungsprofil und auch nach Kostengesichtspunkten kann die Bezugskraft der verstärkten Trägereinlage bei geringen Dehnungen in unterschiedlichen Anteilen auf das textile Flächengebilde bzw. auf die Verstärkungen verteilt sein.

Die Messung der Bezugskraft erfolgt nach EN 29073, Teil 3, an 5 cm breiten Proben bei 200mm Einspannlänge. Der Zahlenwert der Vorspannkraft, angegeben in Centinewton entspricht dabei dem Zahlenwert der Flächenmasse der Probe, angegeben in Gramm pro Quadratmeter.

Bevorzugt bestehen die Spinnvliese aus schmelzspinnbaren Polyestern. Als Polyestermaterial kommen im Prinzip alle zur Faserherstellung geeigneten bekannten Typen in Betracht. Derartige Polyester bestehen überwiegend aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diole haben 2 bis 4 C-Atome, wobei das Ethylenglycol besonders geeignet ist. Besonders vorteilhaft sind Spinnvliese, die zu mindestens 85 mol % aus Polyethylenterephthalat bestehen. Die restlichen 15 mol % bauen sich dann aus Dicarbonsäureeinheiten und Glycoleinheiten auf, die als sogenannte Modifizierungsmittel wirken und die es dem Fachmann gestatten, die physikalischen und chemischen Eigenschaften der hergestellten Filamente gezielt zu beeinflussen. Beispiele für solche Dicarbonsäureeinheiten sind Reste der Isophthalsäure oder von aliphatischen Dicarbonsäure wie z.B. Glutarsäure, Adipinsäure, Sebazinsäure; Beispiele für modifizierend wirkende Diolreste sind solche von längerkettigen Diolen, z. B. von Propandiol oder Butandiol, von Di- oder Triethylenglycol oder, sofern in geringer Menge vorhanden, von Polyglycol mit einem Molgewicht von ca. 500 bis 2000.

Besonders bevorzugt sind Polyester, die mindestens 95 mol % Polyethylenterephthalat (PET) enthalten, insbesondere solche aus unmodifiziertem PET.

Sollen die Trägereinlagen zusätzlich eine flammhemmende Wirkung haben, so ist es von Vorteil, wenn sie aus flammhemmend modifizierten Polyestern ersponnen wurden. Derartige flammhemmend modifizierten Polyester sind bekannt. Sie enthalten Zusätze von Halogenverbindungen, insbesondere Bromverbindungen, oder, was besonders vorteilhaft ist, sie enthalten Phosphonverbindungen, die in die Polyesterkette einkondensiert sind.

Besonders bevorzugt enthalten die Spinnvliese flammhemmend modifizierte Polyester, die in der Kette Baugruppen der Formel (I) 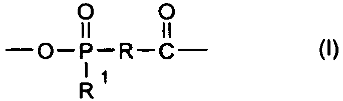 worin R Alkylen oder Polymethylen mit 2 bis 6 C-Atomen oder Phenyl und R¹ Alkyl mit 1 bis 6 C-Atomen, Aryl oder Aralkyl bedeutet, einkondensiert enthalten. Vorzugsweise bedeuten in der Formel (I) R Ethylen und R¹ Methyl, Ethyl, Phenyl, oder o-, m- oder p-Methyl-phenyl, insbesondere Methyl. Derartige Spinnvliese werden z.B. in der DE-A-39 40 713 beschrieben.

Die in den Spinnvliesen enthaltenen Polyester haben vorzugsweise ein Molekulargewicht entsprechend einer intrinsischen Viskosität (IV), gemessen in einer Lösung von 1 g Polymer in 100 ml Dichloressigsäure bei 25 °C, von 0,6 bis 1,4.

Die Einzeltiter der Polyesterfilamente im Spinnvlies betragen zwischen 1 und 16 dtex, vorzugsweise 2 bis 8 dtex.

In einer weiteren Ausführungsform der Erfindung kann das Spinnvlies auch ein schmelzbinderverfestigter Vliesstoff sein, welcher Träger- und Schmelzklebefasern enthält.

Beispiele für Polymere, von denen sich die Trägerfasern ableiten können, sind im wesentlichen aromatische Polyester, wie Poly-(p-hydroxybenzoat) oder vorzugsweise im wesentlichen aliphatische Polyester, wie Polyethylenterephthalat.

Der Anteil der beiden Fasertypen zueinander kann in weiten Grenzen gewählt werden, wobei darauf zu achten ist, dass der Anteil der Schmelzklebefasern so hoch gewählt wird, dass der Vliesstoff durch Verklebung der Trägerfasern mit den Schmelzklebefasern eine für die gewünschte Anwendung ausreichende Festigkeit erhält. Der Anteil des aus der Schmelzklebefaser stammenden Schmelzklebers im Vliesstoff beträgt üblicherweise weniger als 50 Gew.-%, bezogen auf das Gewicht des Vliesstoffes.

Als Schmelzkleber kommen modifizierte Polyester mit einem gegenüber dem Vliesstoff-Rohstoff um 10 bis 50 °C, vorzugsweise 30 bis 50 °C abgesenkten Schmelzpunkt in Betracht. Beispiele für einen derartigen Schmelzkleber sind Polybutylenterephthalate oder durch Einkondensieren längerkettiger Diole und/oder von Isophthalsäure oder aliphatischen Dicarbonsäuren modifiziertes Polyethylenterephthalat.

Die Schmelzkleber werden vorzugsweise in Faserform in die Vliese eingebracht.

Vorzugsweise sind Träger- und Schmelzklebefasern aus einer Polymerklasse aufgebaut. Darunter ist zu verstehen, daß alle eingesetzten Fasern aus einer

Substanzklasse so ausgewählt werden, daß diese nach Gebrauch des Vlieses problemlos recycliert werden können. Bestehen die Trägerfasern beispielsweise aus Polyester, so werden die Schmelzklebefasern ebenfalls aus Polyester oder aus einer Mischung von Polyestern, z. B. als Bikomponentenfaser mit PET im Kern und einen niedriger schmelzenden Polyethylenterephthalat-Copolymeren als Mantel ausgewählt.

Die Einzelfasertiter der Träger- und der Schmelzklebefasern können innerhalb weiter Grenzen gewählt werden. Beispiele für übliche Titerbereiche sind 1 bis 16 dtex, vorzugsweise 2 bis 6 dtex.

Sofern die Trägereinlagen mit flammhemmenden Eigenschaften zusätzlich gebunden sind, enthalten sie vorzugsweise flammhemmende Schmelzkleber. Als flammhemmender Schmelzkleber kann z. B. ein durch Einbau von Kettengliedern der oben angegebenen Formel (I) modifiziertes Polyethylenterephthalat in dem erfindungsgemäßen Schichtstoff vorhanden sein.

Die die Vliesstoffe aufbauenden Filamente oder Stapelfasern können einen praktisch runden Querschnitt besitzen oder auch andere Formen aufweisen, wie hantel-, nierenförmige, dreieckige bzw. tri- oder multilobale Querschnitte. Es sind auch Hohlfasern und Bi- oder Mehrkomponentenfasern einsetzbar. Ferner lässt sich die Schmelzklebefaser auch in Form von Bi- oder Mehrkomponentenfasern einsetzen.

Die das textile Flächengebilde bildenden Fasern können durch übliche Zusätze modifiziert sein, beispielsweise durch Antistatika, wie Ruß.

Das Flächengewicht des Spinnvlieses beträgt zwischen 20 und 500 g/m², vorzugsweise 40 und 250 g/m².

Die vorstehenden Eigenschaften werden durch Fäden erhalten, deren Young-Modul mindestens 5 Gpa, bevorzugt mindestens 10 Gpa, besonders bevorzugt mindestens 20 Gpa, betragen. Die vorstehend genannten Verstärkungsfäden, d.h. auch die Monofile, haben einen Durchmesser zwischen 0,1 und 1 mm oder 10-400 tex, vorzugsweise 0,1 und 0,5 mm, insbesondere 0,1 und 0,3 mm und besitzen eine Bruchdehnung von 0,5 bis 100 %, vorzugsweise 1 bis 60 %. Besonders vorteilhaft weisen die Trägereinlagen eine Dehnungsreserve von weniger als 1 % auf.

Als Dehnungsreserve wird die Dehnung bezeichnet, die auf die Trägereinlage einwirkt bevor die einwirkende Kraft auf die Verstärkungsfäden abgeleitet wird, d.h. eine Dehnungsreserve von 0 % würde bedeuten, das auf die Trägereinlage einwirkende Zugkräfte sofort auf die Verstärkungsfäden abgeleitet werden würden. Dies bedeutet, dass auf das Vlies einwirkende Kräfte nicht erst eine Ausrichtung bzw. Orientierung der Verstärkungsfäden bewirken sondern vielmehr direkt auf die Verstärkungsfäden abgeleitet werden, so dass eine Schädigung des textilen Flächengebildes vermieden werden kann. Dies zeigt sich insbesondere in einem steilen Anstieg der aufzuwendenden Kraft bei kleinen Dehnungen (Kraft-Dehnungs-Diagramm bei Raumtemperatur). Zusätzlich kann mit Hilfe geeigneter Verstärkungsfäden, die eine hohe Bruchdehnung aufweisen, die Höchstzugkraftder Trägereinlage erheblich verbessert werden. Geeignete Verstärkungsfäden sind beispielsweise Mono- oder Multifilamente aus Polyester

Bevorzugt werden als Verstärkungsfäden Multifilamente und/oder Monofilamente auf Basis von Aramiden, vorzugsweise sogenannte Hoch-Modul-Aramide, Kohlenstoff, Glas, Mineralfasern (Basalt), hochfeste Polyester-Monofilamente oder - Multifilamente, hochfeste Polyamid-Monofilamente oder -Multifilamente, sowie sogenannte Hybridmultifilamentgarne (Garne enthaltend Verstärkungsfasern und tieferschmelzende Bindefasern) oder Drähte (Monofilamente) aus Metallen oder metallischen Legierungen eingesetzt.

Bevorzugte Verstärkungen bestehen aus wirtschaftlichen Gründen aus Glas-Multifilamenten in Form von - im Wesentlichen - parallelen Fadenscharen oder Gelegen. Meist erfolgt nur eine Verstärkung in Längsrichtung der Vliesstoffe durch - im Wesentlichen -parallel laufende Fadenscharen.

Die Verstärkungsfäden können als solche oder auch in Form eines textilen Flächengebildes, beispielsweise als Gewebe, Gelege, Gestrick, Gewirke oder als Vlies eingesetzt werden. Bevorzugt werden Verstärkungen mit zueinander parallel laufenden Verstärkungsgarnen, also Kettfadenscharen, sowie Gelege oder Gewebe.

Die Fadendichte kann in Abhängigkeit vom gewünschten Eigenschaftsprofil in weiten Grenzen schwanken. Bevorzugt beträgt die Fadendichte zwischen 20 und 200 Fäden pro Meter. Die Fadendichte wird senkrecht zur Fadenlaufrichtung gemessen. Die Verstärkungsfäden werden vorzugsweise während der Spinnvliesbildung zugeführt und somit in das Spinnvlies eingebettet. Ebenso bevorzugt ist eine Vliesablage auf die Verstärkung oder eine nachträgliche Schichtbildung aus Verstärkung und Vliesstoff durch Assemblieren.

Je nach Anwendungsprofil der Trägereinlage, werden die Spinnvliese nach ihrer Herstellung neben der hydrodynamischen Verfestigung zusätzlich einer chemischen und/oder thermischen Verfestigung unterworfen.

Hierzu werden die schmelzbinderverfestigbaren Spinnvliese, die neben Trägerfasern auch Bindefasern enthalten, in an sich bekannter Weise mit einem Kalander oder in einem Ofen thermisch verfestigt. Die Fasern können auch eine Bi-Komponeneten-Struktur (z.B. Kern/Mantel) aufweisen, bei der der Mantel das Bindepolymer ist.

Enthalten die Spinnvliese keine zur thermischen Verfestigung befähigten Bindefasern, so werden diese Spinnvliese mit einem chemischen Binder imprägniert. Hierzu kommen insbesondere Binder auf Basis von Acrylaten oder Styrolen in Frage. Der Binderanteil beträgt zweckmäßigerweise bis zu 30 Gew.-%, vorzugsweise 2 bis 25 Gew.-%. Die genaue Wahl des Binders erfolgt nach der speziellen Interessenlage des Weiterverarbeiters. Harte Binder erlauben hohe Verarbeitungsgeschwindigkeiten bei einer Imprägnierung, insbesondere Bituminierung, während ein weicher Binder besonders hohe Werte der Weiterreiß- und Nagelausreißfestigkeit ergibt.

In einer weiteren Ausführungsform können auch flammhemmend modifizierte Binder verwendet werden oder sogar ganz auf Binder verzichtet werden.

In einer weiteren Ausführungsform der Erfindung weist die Trägerbahn ein Prägemuster aus statistisch verteilten oder rapportmäßig angeordneten, kleinflächigen Einprägungen, vorzugsweise eine Leinwandprägung auf, bei der die Preßfläche, d.h. die Gesamtheit aller dünnen verdichteten Stellen des Spinnvlieses 30 bis 60 %, vorzugsweise 40 bis 45 % seiner Gesamtfläche ausmachen, und die Dicke der verdichteten Stellen des Vlieses mindestens 20 %, vorzugsweise 25 bis 50 %, der Dicke der nicht verdichteten Stellen des Vlieses beträgt. Dieses Prägemuster kann im Fall der schmelzbinderverfestigten Spinnvliese vorteilhafterweise bei der Kalander-Verfestigung aufgebracht werden. Wird die Trägereinlage durch einen chemischen Binder endverfestigt kann das Prägemuster ebenfalls mittels eines Kalanders aufgeprägt werden. Dieses Prägemuster, das beim Durchlaufen des Spinnvlieses durch einen beheizten Kalander auf beide Oberflächen des Spinnvlieses, vorzugsweise aber nur auf eine Oberfläche des Spinnvlieses aufgebracht wird, weist eine Vielzahl kleiner Einprägungen auf, die eine Größe von 0,2 bis 40 mm², vorzugsweise 0,2 bis 10 mm², haben und durch dazwischen liegende, etwa gleich große, nicht geprägte Flächenelemente des Vlieses voneinander getrennt sind. Die Bestimmung der Fläche der verdichteten Stellen des Vlieses und der nicht verdichteten Stellen des Vlieses kann beispielsweise mittels mikroskopischer Querschnittsaufnahmen erfolgen.

Die Trägereinlagen können mit weiteren textilen Flächengebilden kombiniert werden, so dass deren Eigenschaften variabel sind. So können beispielsweise weitere textile Flächengebilde, umfassend Glasfasern, mit der Trägereinlage kombiniert werden, um die Isolations- bzw. Brandschutzwirkung der Trägereinalge zu erhöhen. Eine weitere Funktion eines solchen zusätzlichen textilen Flächengebildes kann beispielsweise darin liegen, die Wurzelfestigkeit der Trägereinlage zu erhöhen. Derartige Verbundstoffe, die die erfindungsgemäße Trägereinlage enthalten, sind ebenfalls Gegenstand der Erfindung.

Die Zuführung der Verstärkung kann vor, während und/oder nach der Bildung der textilen Fläche erfolgen.

Insofern die Verstärkung nach der Bildung der textilen Fläche erfolgt oder wenn die Verstärkung zwischen zwei textilen Flächen (Sandwich) eingebaut wird, können die textilen Flächen zuvor verfestigt werden, wobei hier auch eine mechanische Verfestigung durch Vernadelung erfolgen kann. Hierbei werden Nadeldichten von 20 bis 100 Stichen/cm² verwendet.

Die mittels des erfindungsgemäßen Verfahrens hergestellte Trägereinlage weist somit mindestens ein Spinnvlies aus Polyester oder ein Stapelfaservlies aus Polyester und mindestens eine Verstärkung wie in Anspruch 1 definiert auf. Die Verstärkung kann an mindestens einer Oberfläche des textilen Flächengebildes angebracht sein oder aber in dem textilen Flächengebilde, beispielsweise durch Einbau der Verstärkung bei der Bildung der textilen Fläche. Des Weiteren kann die Trägereinlage neben der Verstärkung auch zwei textile Flächengebilde aufweisen, wobei diese sandwichartig um die Verstärkung angeordnet sind.

In einer bevorzugten Ausführungsform des Verfahrens erfolgt die Zuführung der Verstärkung und jede thermische Behandlung im Herstellverfahren der Trägereinlage unter Spannung, insbesondere unter Längsspannung. Eine thermische Behandlung unter Spannung liegt vor, wenn die Lage der Verstärkung in der Trägereinlage bei einem thermischen Schritt bleibt; dabei ist insbesondere der Erhalt der Längsfäden durch Anlegen einer Längsspannung von Interesse. Die Bildung des textilen Flächengebildes kann auf einer gespannt zulaufenden Verstärkung erfolgen oder die Verstärkung kann während des Flächenbildungsprozesses, z. B. bei der Vliesherstellung, zulaufen oder es kann ein textiles Flächengebilde fertig gestellt werden und durch nachträgliches Assemblieren mit einer Verstärkung verbunden werden. Der Verbund des textilen Flächengebildes mit der Verstärkung erfolgt erfindungsgemäß mittels hydrodynamischer Methoden wie in Anspruch 1 sowie den Unteransprüchen 2 bis 24 beschrieben.

Die gemäß a) beschriebene Spinnvliesbildung kann mittels an sich bekannter Spinnapparate erfolgen.

Hierzu wird das geschmolzene Polymer durch mehrere hintereinander geschaltete Reihen von Spinndüsen bzw. Gruppen von Spinndüsenreihen mit Polymeren beschickt. Soll ein schmelzbinderverfestigtes Spinnvlies erzeugt werden, so wird abwechselnd mit Polymeren beschickt, die die Trägerfaser und die Schmelzklebefasern bilden. Die ausgesponnenen Polymerströme werden in an sich bekannter Weise verstreckt, und z. B. unter Verwendung einer rotierenden Prallplatte in Streutextur auf einem Transportband abgelegt.

Um speziellen Anforderungen zu genügen, wie z.B. Brandschutz oder extreme thermomechanische Beanspruchung, können die erfindungsgemäßen Trägereinlagen noch mit weiteren Komponenten zu mehrschichtigen Verbundstoffen kombiniert werden. Beispiele für weitere Komponenten sind Glasvliese, thermoplastische oder metallische Folien, Dämmstoffe, etc.

Die mittels des erfindungsgemäßen Verfahrens hergestellten Trägereinlagen lassen sich zur Herstellung von bituminierten Dach- und Dichtungsbahnen verwenden. Dazu wird das Trägermaterial in an sich bekannter Weise mit Bitumen behandelt und anschließend gegebenenfalls mit einem körnigen Material, beispielsweise mit Sand, bestreut. Die auf diese Weise hergestellten Dach- und Dichtungsbahnen zeichnen sich durch gute Verarbeitbarkeit aus. Die bituminierten Bahnen enthalten mindestens eine in eine Bitumenmatrix eingebettete - vorstehend beschriebene - Trägerbahn, wobei der Gewichtsanteil des Bitumens am Flächengewicht der bituminierten Dachbahn vorzugsweise 60 bis 97 Gew.-% und der des Spinnvlieses 3 bis 40 Gew.-% beträgt. Bei diesen Bahnen kann es sich auch um eine so genannte Dachunterspannbahn handeln.

Anstelle von Bitumen kann auch ein anderes Material, z.B. Polyethylen oder Polyvinylchlorid , Polyurethane, EPDM oder TPO (Polyolefine) zur Beschichtung der Trägereinlage verwendet werden.

### Beispiele

Eine Trägereinlage mit zwei textilen Flächengebilden und einer Verstärkung wird wie folgt hergestellt:

Auf einem Rohvlies mit einem Flächengewicht von 100 g/m² wird ein Glasgelege 1,6 x 0,8 (34tex) abgelegt und mit einem weiteren Rohvlies mit einem Flächengewicht von 100 g/m² abgedeckt. Der Verbund wird anschließend durch die Wasserstrahl-Vernadelungsanlage gefahren und verfestigt. Hierbei wurde jeweils ein 60 Mesh-Siebgewebe verwendet.

Anschließend werden die Trägereinlagen hinsichtlich ihrer anwendungstechnischen Eigenschaften untersucht. Die Ergebnisse sind in Tabelle 1 zusammengefasst.

Ein direkter Vergleich einer weiteren erfindungsgemäßen Trägereinlage mit einer mechanisch verfestigten ist nachfolgend in Tabelle 2 aufgezeigt.

**Tabelle 2**

| | Wasserstrahl-Vernadelung | Mechanische Vernadelung |
|---|---|---|
| Höchstzugkraft längs (daN/5cm) / Flächengwicht (g/m2) | 0.47 | 0.35 |
| Delaminierungswiderstand | 2 | 2.5 |
| (daN/5 cm) | | |
| Höchstzugkraft Glasverstärkung, F-Glas längs (daN) | 22 | 7 |

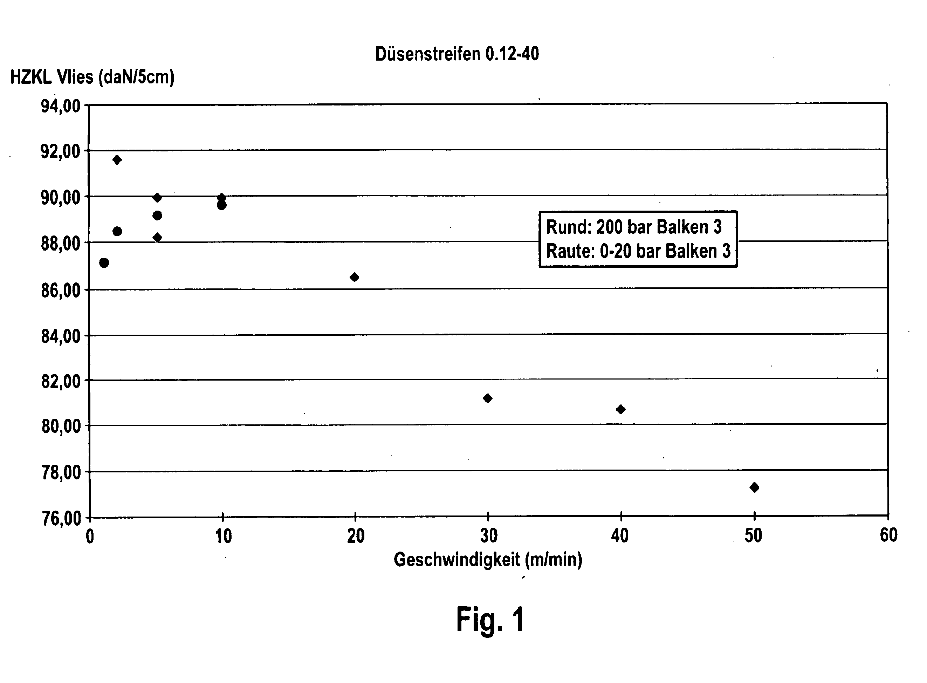

Aus Abbildung 1 geht hervor, dass bei den gewählten Parametern der Wasserstrahlvernadelung eine sehr gute HZKL (Höchst-Zugkraft längs) im Bereich von bis zu 20m/min erreicht werden kann. Oberhalb 20m/min nimmt die HZKL jedoch stark ab. Hier werden weitere Balken und/oder ein höherer Wasserdruck in der Wasserstrahlvernadelung notwendig.

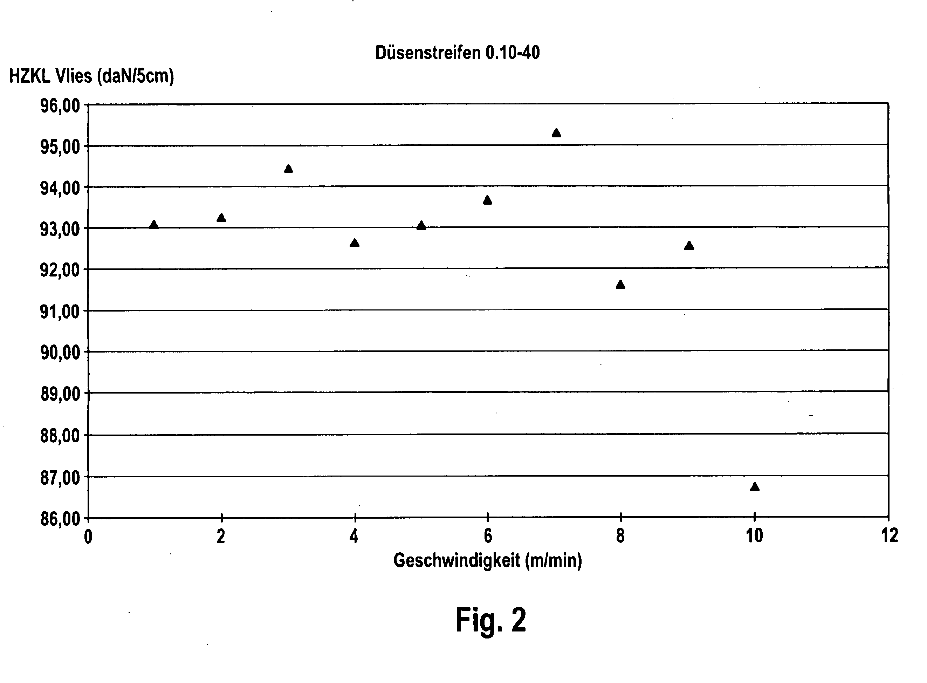

Abbildung 2 zeigt Ergebnisse analog zu Abbildung 1, jedoch für den Düsenstreifen 0.10-40.

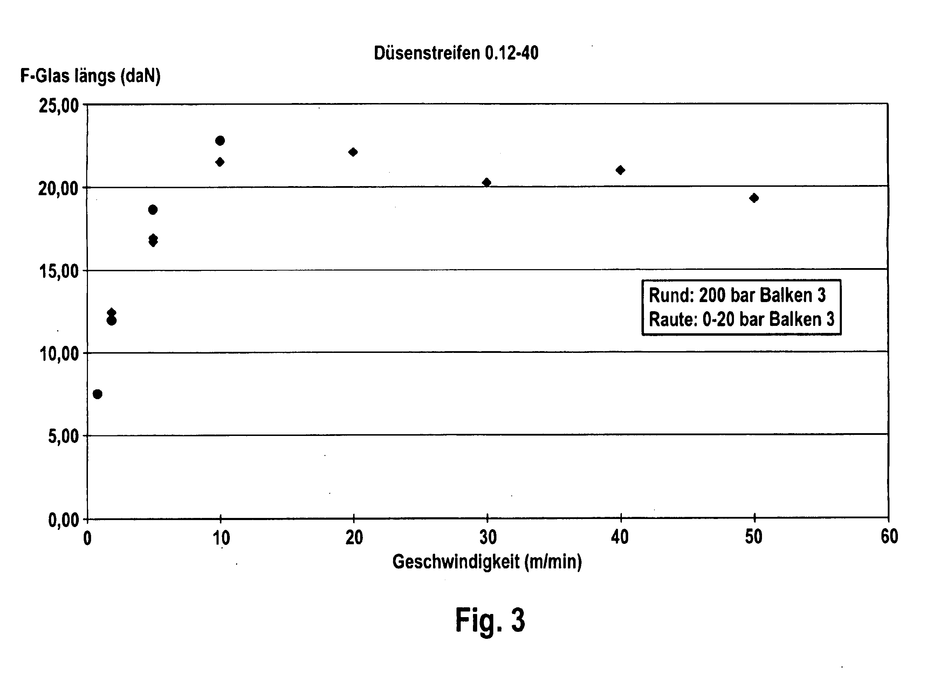

Abbildung 3 zeigt, dass bei den gewählten Parametern der Wasserstrahlvernadelung die Festigkeit der Glasfäden (F-Glas) im Bereich oberhalb 5 m/min praktisch vollständig erhalten werden kann. Unterhalb von 2 m/min ist der Energieeintrag durch die Wasserstrahlvernadelung zu hoch, die Glasfäden werden geschädigt und die Festigkeit nimmt ab

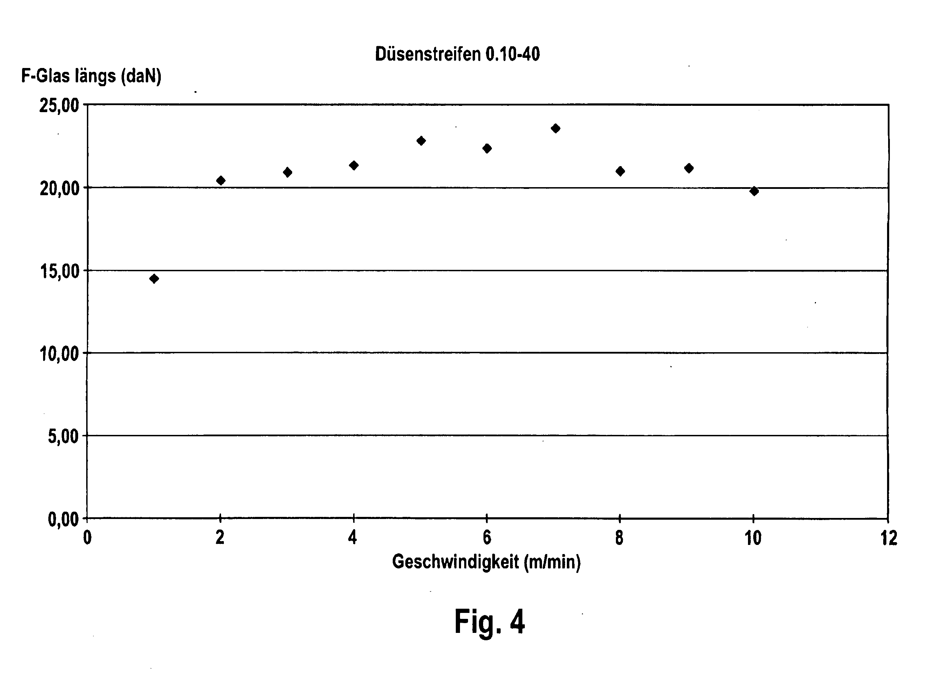

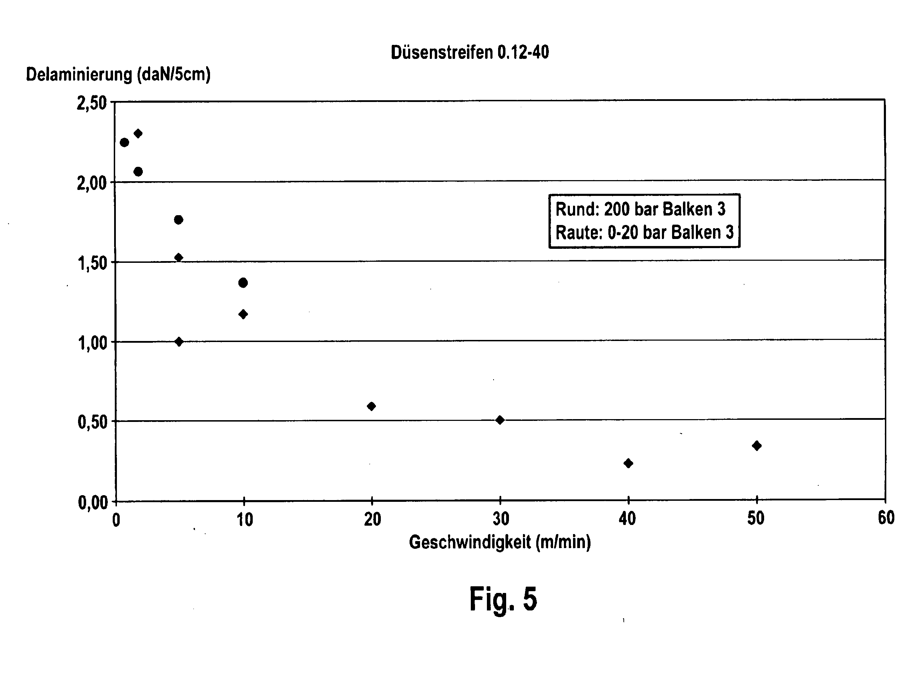

Abbildung 4 zeigt Ergebnisse analog Abbildung 3, jedoch für den Düsenstreifen 0.10-40 (Durchmesser-Anzahl der Düsen pro inch) Abbildung 5 zeigt, dass bei den gewählten Parametern der Wasserstrahlvernadelung eine sehr gute Delaminierungs-Beständigkeit erreicht wird. Im Bereich von unterhalb 10m/min sind die Werte für die Anwendung als Trägereinlage ausreichend, oberhalb davon kann der Abfall durch weitere Balken in der Wasserstrahlvernadelung kompensiert werden.

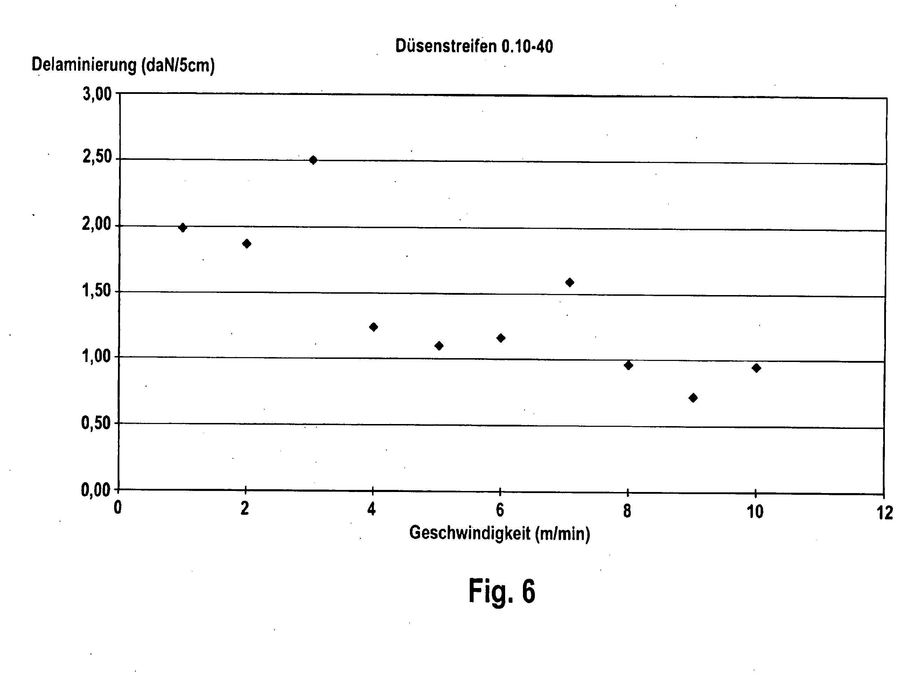

Abbildung 6 zeigt Ergebnisse analog Abbildung 5, jedoch für den Düsenstreifen 0.10-40

Aus den obigen Werten ist für den Fachmann deutlich erkennbar, dass einerseits durch die Wasserstrahlvernadelung eine Optimierung aller drei Parameter, d.h. HZKL, F-Glas längs und Delaminierung möglich ist. Durch eine mechanische Vernadelung können maximal 2 der 3 Parameter optimiert werden. Somit unterscheiden sich die mittels des erfindungsgemäßen Verfahrens hergestellte Trägereinlagen von den bisher bekannten Trägereinlagen. Die vorstehenden experimentellen Daten zeigen dem Fachmann ferner auf, welcher Energieeintrag für die Wasserstrahl-Vernadelung der erfindungsgemäße Trägereinlage notwendig ist, um die vorstehend genannte Optimierung zu erreichen. Aus diesem Grund sollen die bei den Versuchen gewählten Parameter nicht einschränkend verstanden werden. Tabelle 1

| **Versuch V06543 -** | **Düsenstreifen** | **Balken 1 (bar)** | **Balken 2 (bar)** | **Balken 3 (bar)** | **Geschwind. (m/min)** | **Dela (daN/5cm)** | **F-Glas längs (daN)** | **Standardabw. F-Glas längs** | **HZKL Vlies (daN/5cm)** |
|---|---|---|---|---|---|---|---|---|---|
| V1 | 0.12-40 | 20 | 220 | 20 | 5 | 1,00 | 16,73 | 2,62 | 88,24 |
| V 2 | 0.12-40 | 40 | 220 | 0 | 5 | 1,53 | 16,88 | 2,41 | 89,96 |
| V 3 | 0.12-40 | 40 | 220 | 0 | 2 | 2,30 | 12,50 | 1,34 | 91,61 |
| V 4 | 0.12-40 | 40 | 220 | 0 | 10 | 1,18 | 21,55 | 2,00 | 89,90 |
| V 5 | 0.12-40 | 40 | 220 | 0 | 20 | 0,59 | 22,14 | 2,82 | 86,49 |
| V 6 | 0.12-40 | 40 | 220 | 0 | 30 | 0,50 | 20,26 | 1,49 | 81,15 |
| V 7 | 0.12-40 | 40 | 220 | 0 | 40 | 0,23 | 21,04 | 1,70 | 80,64 |
| V 8 | 0.12-40 | 40 | 220 | 0 | 50 | 0,34 | 19,38 | 2,15 | 77,23 |
| V 9 | 0.10-40 | 40 | 220 | 0 | 1 | 1,99 | 14,52 | 1,56 | 93,11 |
| V 10 | 0.10-40 | 40 | 220 | 0 | 2 | 1,87 | 20,44 | 1,49 | 93,23 |
| V11 | 0.10-40 | 40 | 220 | 0 | 3 | 2,50 | 20,94 | 1,39 | 94,45 |
| V12 | 0.10-40 | 40 | 220 | 0 | 4 | 1,24 | 21,35 | 2,07 | 92,63 |
| V 13 | 0.10-40 | 40 | 220 | 0 | 5 | 1,10 | 22,88 | 2,93 | 93,06 |
| V 14 | 0.10-40 | 40 | 220 | 0 | 6 | 1,16 | 22,41 | 1,79 | 93,67 |
| V15 | 0.10-40 | 40 | 220 | 0 | 7 | 1,59 | 23,62 | 3,30 | 95,30 |
| V16 | 0.10-40 | 40 | 220 | 0 | 8 | 0,96 | 21,00 | 1,38 | 91,60 |
| V 17 | 0.10-40 | 40 | 220 | 0 | 9 | 0,71 | 21,23 | 2,38 | 92,54 |
| V 18 | 0.10-40 | 40 | 220 | 0 | 10 | 0,95 | 19,82 | 2,05 | 86,74 |
| V19/1 | 0.12-40 | 90 | 220 | 200 | 1 | 2,25 | 7,51 | 1,08 | 87,14 |
| V 20 | 0.12-40 | 90 | 220 | 200 | 2 | 2,07 | 11,94 | 1,57 | 88,49 |
| V21 | 0.12-40 | 90 | 220 | 200 | 5 | 1,77 | 18,68 | 1,25 | 89,19 |
| V 22 | 0.12-40 | 90 | 220 | 200 | 10 | 1,37 | 22,80 | 1,95 | 89,63 |

## Patentansprüche

1. Verfahren zur Herstellung einer Trägereinlage bestehend aus mindestens einem textilen Flächengebilde und mindestens einer Verstärkung, **dadurch gekennzeichnet, dass**
i) das textile Flächengebilde ein Spinnvlies aus Polyester oder ein Stapelfaservlies aus Polyester ist,
ii) die Verfestigung des Polyestervlieses, welches bereits die Verstärkung aufweist, hydrodynamisch erfolgt,
iii) die Verstärkung in Form von Verstärkungsfäden vorliegt
iv) der Durchmesser der Verstärkungsfäden 0,1 bis 1 mm oder 10 - 400 tex beträgt und
v) die Verstärkungsfäden ein Young-Modul mindestens 5 Gpa aufweisen, umfassend die Maßnahmen:
a) Bildung eines Spinnvlieses aus Polyester oder eines Stapelfaservlieses aus Polyester,
b) Zuführen der Verstärkung in Form von Verstärkungsfäden, deren Durchmesser 0,1 bis 1 mm oder 10 - 400 tex beträgt und deren Young-Modul mindestens 5 Gpa beträgt,
c) gegebenenfalls Zuführen eines weiteren Spinnvlieses aus Polyester oder eines Stapelfaservlieses aus Polyester, so dass die Verstärkung sandwichartig von textilen Flächengebilden umgeben ist,
d) Verfestigung der gemäß Maßnahme c) erhaltenen Trägereinlage mittels hydrodynamischer Verfestigungsmethoden,
e) gegebenenfalls Imprägnieren der verfestigten Trägereinlage mit einem Binder und
f) gegebenenfalls Verfestigung des gemäß d) erhaltenen Zwischenproduktes durch erhöhte Temperatur und/oder Druck, wobei die Reihenfolge der Schritte a) und b) auch umgekehrt sein kann,
**dadurch gekennzeichnet, dass** die Verfestigung eine Vorverfestigung im Druckbereich von 5 bis 200 bar und die weitere Verfestigung bei höheren Drücken im Druckbereich von 100 bis 300 bar erfolgt.

2. Verfahren nach Anspruch 1, **dadurch gekennzeichnet, dass** die Bildung des Polyestervlieses auf einer gespannt zulaufenden Verstärkung erfolgt.

3. Verfahren nach Anspruch 1, **dadurch gekennzeichnet, dass** die Zuführung der Verstärkung während des Flächenbildungsprozesses des Polyestervlieses erfolgt.

4. Verfahren nach Anspruch 1, **dadurch gekennzeichnet, dass** mindestens ein fertiggestelltes Polyestervlies und mindestens eine Verstärkung assembliert und gemäß Maßnahme d) durch Wasserstrahl-Vernadelung verbunden werden.

5. Verfahren gemäß Anspruch 4, **dadurch gekennzeichnet, dass** die Wasserstrahl-Vernadelung beidseitig durchgeführt wird.

6. Verfahren gemäß Anspruch 4, **dadurch gekennzeichnet, dass** der Strahldurchmesser beträgt zwischen 0,05 und 0,25 mm, vorzugsweise zwischen 0,07 und 0,2 mm, beträgt.

7. Verfahren gemäß Anspruch 4, **dadurch gekennzeichnet, dass** die Anzahl der Düsen bei der Wasserstrahl-Vernadelung zwischen 10 und 60 Düsen pro 2,54cm (1 inch) beträgt.

8. Verfahren gemäß Anspruch 4, **dadurch gekennzeichnet, dass** die Wasserstrahl-Vernadelung mittels mehrerer nacheinander angeordneter Balken erfolgt.

9. Verfahren gemäß Anspruch 1, **dadurch gekennzeichnet, dass** der obere Wert für den Energieeintrag bei der Wasserstrahl-Vernadelung einer Wasserstrahl-Vernadelung mit drei Düsenbalken bei Düsenbalken von 40 Düsen pro 2,54 cm (1 inch), einem Druck von 220 bar und einer Vorschubgeschwindigkeit von 2 m/min, wobei eine Vorverfestigung mit einem gleichen Balken und einem Druck von 40 bar stattgefunden hat, entspricht.

10. Verfahren gemäß Anspruch 1, **dadurch gekennzeichnet, dass** der obere Wert für den Energieeintrag durch die Wasserstrahl-Vernadelung (bezogen auf eine Trägereinlage bestehend aus einem Rohvlies mit einem Flächengewicht von 100 g/m², einem darauf abgelegten Glasgelege 1,6 x 0,8 (34tex) und einem weiteren, auf dem Glasgelege abgelegten Rohvlies mit einem Flächengewicht von 100 g/m²) einer Wasserstrahl-Vernadelung mit einem Düsenbalken von 40 Düsen pro 2,54 cm (1 inch), einem Druck von 220 bar und einer Vorschubgeschwindigkeit von 2 m/min, entspricht, wobei ein 60 Mesh-Siebgewebe bei der Wasserstrahl-Vernadelung verwendet wird.

11. Verfahren nach Anspruch 1, **dadurch gekennzeichnet, dass** die Verstärkung eine Kraft aufnimmt, so dass sich im Kraft-Dehnungs-Diagramm (bei 20 °C) die Bezugskraft der Trägereinlage mit Verstärkung verglichen mit der Trägereinlage ohne Verstärkung im Bereich zwischen 0 und 1 % Dehnung an mindestens einer Stelle um mindestens 10 % unterscheidet.

12. Verfahren nach Anspruch 1, **dadurch gekennzeichnet, dass** die Verstärkung eine Kraft aufnimmt, so dass sich im Kraft-Dehnungs-Diagramm (bei 20 °C) die Bezugskraft der Trägereinlage mit Verstärkung verglichen mit der Trägereinlage ohne Verstärkung im Bereich zwischen 0 und 1 % Dehnung an mindestens einer Stelle um mindestens 20 % unterscheidet.

13. Verfahren nach Anspruch 1, **dadurch gekennzeichnet, dass** das Polyestervlies vor Einbau der Verstärkung mechanisch, thermisch und/oder chemisch verfestigt worden ist.

14. Verfahren nach Anspruch 1, **dadurch gekennzeichnet, dass** die Trägereinlage nachdem die Verstärkung eingebaut ist, ausschließlich hydrodynamisch, thermisch und/oder chemisch verfestigt wird.

15. Verfahren nach Anspruch 1, **dadurch gekennzeichnet, dass** das Vlies ein schmelzbinderverfestigtes Vlies ist.

16. Verfahren nach Anspruch 1, **dadurch gekennzeichnet, dass** das Vlies durch einen chemischen Binder verfestigt ist.

17. Verfahren nach Anspruch 1, **dadurch gekennzeichnet, dass** das Flächengewicht des Polyestervlieses zwischen 20 und 500 g/m² beträgt.

18. Verfahren nach Anspruch 1, **dadurch gekennzeichnet, dass** die Verstärkungsfäden einen Durchmesser von 0,1 bis 0,5 mm haben.

19. Verfahren nach Anspruch 1, **dadurch gekennzeichnet, dass** die Verstärkungsfäden eine Bruchdehnung von 0,5 bis 100 % aufweisen.

20. Verfahren nach Anspruch 1, **dadurch gekennzeichnet, dass** die Verstärkungsfäden in Form von Monofilamenten oder Multifilamenten vorliegt.

21. Verfahren nach Anspruch 1, **dadurch gekennzeichnet, dass** die Verstärkungsfäden aus Aramiden, Kohlenstoff, Glas, Mineralfasern (Basalt), hochfesten Polyester- Mono- und/oder Multifilamenten, hochfesten Polyamid Mono- und/oder Multifilamenten oder Hybridmultifilamenten bestehen.

22. Verfahren nach Anspruch 1, **dadurch gekennzeichnet, dass** die Verstärkungsfäden in Form einer Fadenschar, eines Gewebes, Geleges, Gestrickes oder Gewirkes vorliegen.

23. Verfahren nach Anspruch 1, **dadurch gekennzeichnet, dass** das Polyestervlies ein Prägemuster aufweist.

24. Verfahren nach Anspruch 1, **dadurch gekennzeichnet, dass** die hydrodynamische Verfestigung eine Wasserstrahl-Vernadelung ist.

## Claims

1. Method for manufacturing a supporting insert consisting of at least one textile sheet and at least one reinforcement, **characterised in that**
i) the textile sheet is a polyester spunbond or a polyester staple fibre nonwoven,
ii) the polyester nonwoven which already has the reinforcement is hydrodynamically consolidated,
iii) the reinforcement is present in the form of reinforcing filaments
iv) the diameter of the reinforcing filaments is 0.1 to 1 mm or 10-400 tex
and
v) the reinforcing filaments have a Young's modulus of at least 5 Gpa, comprising the measures:
a) forming a spunbond from polyester or a staple fibre nonwoven from polyester,
b) supplying the reinforcement in the form of reinforcing filaments whose diameter is 0.1 to 1 mm or 10-400 tex and whose Young's modulus is at least 5 Gpa,
c) optionally supplying another polyester spunbond or a polyester staple fibre nonwoven, so that the reinforcement is surrounded by textile sheets in a sandwich fashion,
d) consolidating the supporting insert obtained according to measure c) by means of hydrodynamic consolidation methods,
e) optionally impregnating the consolidated supporting insert with a binder and
f) optionally consolidating the intermediate product obtained according to d) by elevated temperature and/or pressure, where the sequence of steps a) and b) can also be reversed,
**characterised in that** the consolidation comprises a pre-consolidation in the pressure range of 5 to 200 bar and the further consolidation takes place at higher pressures in the pressure range of 100 to 300 bar.

2. The method according to claim 1, **characterised in that** the polyester nonwoven is formed on a reinforcement running under tension.

3. The method according to claim 1, **characterised in that** the reinforcement is supplied during the surface formation process of the polyester nonwoven.

4. The method according to claim 1, **characterised in that** at least one polyester nonwoven and at least one reinforcement are assembled and bonded by water jet needling according to measure d).

5. The method according to claim 4, **characterised in that** the water jet needling is carried out on both sides.

6. The method according to claim 4, **characterised in that** the jet diameter is between 0.05 and 0.25 mm, preferably between 0.07 and 0.2 mm.

7. The method according to claim 4, **characterised in that** the number of nozzles in the water jet needling is between 10 and 60 nozzles per 2.54 cm (1 inch).

8. The method according to claim 4, **characterised in that** the water jet needling is carried out by means of a plurality of successively arranged bars.

9. The method according to claim 1, **characterised in that** the upper value for the energy input in the water jet needling of a water jet needling with three nozzle bars using nozzle bars of 40 nozzles per 2.54 cm (1 inch) corresponds to a pressure of 220 bar and a feed rate of 2 m/min, wherein a pre-consolidation has taken place with the same nozzle bar and a pressure of 40 bar.

10. The method according to claim 1, **characterised in that** the upper value for the energy input by water jet needling (relative to a supporting insert consisting of a raw nonwoven having a weight per unit area of 100 g/m², a 1.6 x 0.8 (34 tex) glass fabric placed thereon, and another raw nonwoven placed on the glass fabric having a weight per unit area of 100 g/m²) of a water jet needling using a nozzle bar of 40 nozzles per 2.54 cm (1 inch) corresponds to a pressure of 220 bar and a feed rate of 2 m/min, wherein a 60 mesh screen fabric is used in the water jet needling.

11. The method according to claim 1, **characterised in that** the reinforcement absorbs a force so that in the force-elongation diagram (at 20°C), the reference force of the supporting insert with reinforcement compared with the supporting insert without reinforcement in the range between 0 and 1% elongation differs by at least 10% at at least one point.

12. The method according to claim 1, **characterised in that** the reinforcement absorbs a force so that in the force-elongation diagram (at 20°C), the reference force of the supporting insert with reinforcement compared with the supporting insert without reinforcement in the range between 0 and 1% elongation differs by at least 20% at at least one point.

13. The method according to claim 1, **characterised in that** the polyester nonwoven has been mechanically, thermally and/or chemically consolidated before inserting the reinforcement.

14. The method according to claim 1, **characterised in that** after inserting the reinforcement, the supporting insert is exclusively hydrodynamically, thermally and/or chemically consolidated.

15. The method according to claim 1, **characterised in that** the nonwoven is a melt-binder consolidated nonwoven.

16. The method according to claim 1, **characterised in that** the nonwoven is consolidated by a chemical binder.

17. The method according to claim 1, **characterised in that** the weight per unit area of the polyester nonwoven is between 20 and 500 g/m².

18. The method according to claim 1, **characterised in that** the reinforcing filaments have a diameter of 0.1 to 0.5 mm.

19. The method according to claim 1, **characterised in that** the reinforcing filaments have a breaking elongation of 0.5 to 100%.

20. The method according to claim 1, **characterised in that** the reinforcement is present in the form of monofilaments or multifilaments.

21. The method according to claim 1, **characterised in that** the reinforcing filaments consist of aramides, carbon, glass, mineral fibres (basalt), high-strength polyester mono- and/or multifilaments, high-strength polyamide mono- and/or multifilaments or hybrid multifilaments.

22. The method according to claim 1, **characterised in that** the reinforcement is present in the form of a fibre bundle, a woven fabric, scrim, knitted fabric or crocheted fabric.

23. The method according to claim 1, **characterised in that** the polyester nonwoven has an embossing pattern.

24. The method according to claim 1, **characterised in that** the hydrodynamic consolidation is a water jet needling.

## Revendications

1. Procédé de fabrication d'un insert porteur composé d'au moins une étoffe textile et d'au moins un renforcement, **caractérisé en ce que** i) L'étoffe textile est un non-tissé spunbond en polyester ou un non-tissé en fibres courtes,
ii) Le non-tissé en polyester, lequel est déjà doté d'un renforcement, est solidifié hydrodynamiquement,
iii) Le renforcement est présent sous forme de fils de renforcement,
iv) Le diamètre du fil de renforcement est de 0,1 à 1mm ou de 10 à 400 tex et
v) Les fils de renforcement présentent un module de Young d'au moins 5 GPa, comprenant les mesures suivantes :
a). Formation d'un non-tissé spunbond en polyester ou d'un non-tissé en fibres courtes de polyester,
b). Renforcement au moyen de fils de renforcement dont le diamètre se situe entre 0,1 à 1 mm ou entre 10 à 400 tex, et dont le module de Young s'élève à au moins 5 GPas,
c). Éventuellement, l'inclusion d'un autre non-tissé spunbond en polyester ou d'un non-tissé en fibres courtes de polyester, de façon à ce que les renforcements soient entourés d'étoffes textiles à la façon d'un sandwich,
d). Consolidation de l'insert porteur obtenu selon la mesure contenue dans c) au moyen d'une méthode de consolidation hydrodynamique, e). Éventuellement, imprégnation des inserts porteurs solidifiés avec un liant et
f). Éventuellement, la consolidation du produit intermédiaire obtenu selon d) au moyen de température augmentées ou de pression, durant quoi l'ordre des étapes a) et b) peut également être inversé, **Caractérisé en ce que** le procédé de consolidation comprend une pré-consolidation à l'intérieur d'une plage de pression de 5 à 200 bars et une autre consolidation à l'intérieur d'une plage de pression de 100 à 300 bars.

2. Procédé selon la revendication 1, **caractérisé en ce que** la formation du non-tissé en polyester est effectuée sur un renforcement serré.

3. Procédé selon la revendication 1, **caractérisé en ce que** le renforcement est introduit pendant le processus de formation de l'étoffe du non-tissé en polyester.

4. Procédé selon la revendication 1, **caractérisé en ce que** au moins un des non-tissés de polyester fabriqué et au moins un renforcement sont assemblés et, selon la mesure d), liés par aiguilletage au moyen de jets d'eau.

5. Procédé selon la revendication 4, **caractérisé en ce que** l'aiguilletage par jets d'eau est effectué des deux côtés.

6. Procédé selon la revendication 4, **caractérisé en ce que** le diamètre du jet mesure entre 0,05 et 0,25 mm, de préférence entre 0,07 et 0,2 mm.

7. Procédé selon la revendication 4, **caractérisé en ce que** le nombre de gicleurs pour l'aiguilletage par jets d'eau se situe entre 10 et 60 par 2,54 cm (1 pouce).

8. Procédé selon la revendication 4, **caractérisé en ce que** l'aiguilletage par jets d'eau est effectué grâce à plusieurs barres placés l'un après l'autre de façon consécutive.

9. Procédé selon la revendication 1, **caractérisé en ce que** la valeur supérieure pour l'entrée d'énergie durant l'aiguilletage par jets d'eau correspond à un aiguilletage par jets d'eau avec 3 barres à gicleurs dotées de 40 gicleurs par 2,54 cm (1 pouce), une pression de 220 bars et une vitesse d'avancement de 2m/min, la pré-consolidation ayant eu lieu avec une barre similaire et à une pression de 40 bars.

10. Procédé selon la revendication 1, **caractérisé en ce que** la valeur supérieure pour l'entrée d'énergie durant l'aiguilletage par jets d'eau (relativement à un insert porteur composé d'un non-tissé brut avec une masse surfacique de 100 g/m², un stratifil de verre de 1,6 x 0,8 (34 tex) qui y est déposé et un autre non-tissé brut, posé sur le stratifil de verre, avec une masse surfacique de 100 g/m²) correspond à un aiguilletage par jets d'eau avec une barre de gicleurs dotée de 40 gicleurs par 2,54 cm (1 pouce), une pression de 220 bars et une vitesse d'avancement de 2m/min, une toile à 60 mailles étant utilisées durant l'aiguilletage par jets d'eau.

11. Procédé selon la revendication 1, **caractérisé en ce que** le renforcement absorbe une force de façon à ce que, dans le graphique de force-allongement (à 20°C), la force de référence de l'insert porteur avec renforcement comparée à l'insert porteur sans renforcement, dans la plage de 0 à 1 % d'allongement, s'élève à au moins 10 % à au moins un endroit.

12. Procédé selon la revendication 1, **caractérisé en ce que** le renforcement absorbe une force de façon à ce que, dans le graphique de force-allongement (à 20°C), la force de référence de l'insert porteur avec renforcement comparée à l'insert porteur sans renforcement, dans la plage de 0 à 1 % d'allongement, s'élève à au moins 20 % à au moins un endroit.

13. Procédé selon la revendication 1, **caractérisé en ce que** le non-tissé de polyester a été consolidé mécaniquement, thermiquement et/ou chimiquement avant que le renforcement y soit intégré.

14. Procédé selon la revendication 1, **caractérisé en ce que** l'insert porteur est consolidé exclusivement de façon hydrodynamique, thermique et /ou chimique après que le renforcement y ait été intégré.

15. Procédé selon la revendication 1, **caractérisé en ce que** le non-tissé est un non-tissé lié par liant fusible.

16. Procédé selon la revendication 1, **caractérisé en ce que** le non-tissé est lié à l'aide d'un liant chimique.

17. Procédé selon la revendication 1, **caractérisé en ce que** la masse surfacique du non-tissé en polyester se situe entre 20 et 500 g/m².

18. Procédé selon la revendication 1, **caractérisé en ce que** les fils de renforcement possèdent un diamètre de 0,1 à 0,5 mm.

19. Procédé selon la revendication 1, **caractérisé en ce que** les fils de renforcement présentent un allongement à la rupture de 0,5 à 100 %.

20. Procédé selon la revendication 1, **caractérisé en ce que** les fils de renforcement prennent la forme de monofilaments ou de multifilaments.

21. Procédé selon la revendication 1, **caractérisé en ce que** les fils de renforcement sont composés d'aramides, de carbone, de vitre, de fibres minérales (basalte), de mono et/ou multifibres de polyesters à haute résistance, de mono et/ou multifibres de polyamides à haute résistance ou de multifilaments hybrides.

22. Procédé selon la revendication 1, **caractérisé en ce que** les fils de renforcement ont la forme de bandes de fil, d'un tissu, d'un stratifil, d'un tissu à mailles ou d'un tricot.

23. Procédé selon la revendication 1, **caractérisé en ce que** le non-tissé de polyester présente un motif gaufré.

24. Procédé selon la revendication 1, **caractérisé en ce que** la consolidation hydrodynamique est un aiguilletage par jets d'eau.
